# EUROPÄISCHE PATENTSCHRIFT

(11) **EP 3 915 708 B1**
(45) Veröffentlichungstag und Bekanntmachung des Hinweises auf die Patenterteilung: **24.07.2024**
(21) Anmeldenummer: 21167375.1
(22) Anmeldetag: 08.04.2021
(51) Int. Cl.: B23K 9/028, B23K 9/095, B23K 9/167

(54) **ORBITALSCHWEISSKOPF SOWIE VERFAHREN ZUM BETRIEBEN EINER ORBITALCHWEISSVORRICHTUNG**
ORBITAL WELDING HEAD AND METHOD FOR OPERATING AN ORBITAL WELDING DEVICE
TÊTE DE SOUDAGE ORBITALE ET PROCÉDÉ DE FONCTIONNEMENT D'UN APPAREIL DE SOUDAGE ORBITAL

(30) Priorität: 07.05.2020 DE 102020112463
(43) Veröffentlichungstag der Anmeldung: 01.12.2021
(73) Patentinhaber: Illinois Tool Works Inc., Glenview, IL 60025 (US)
(72) Erfinder: Foh, Marcel, Glenview, Illinois 60025 (US); Tamm, Markus, Glenview, Illinois 60025 (US)
(74) Vertreter: HGF

(56) Entgegenhaltungen:
- EP-A1- 3 424 633
- EP-A1- 3 650 157
- DE-A1- 102012 223 214
- US-A1- 2010 051 586

## Beschreibung

Die Erfindung betrifft allgemein Orbitalschweißvorrichtungen der sog. geschlossenen oder offenen Bauform.

Der Stand der Technik US 2010/0051586 A1 (offenbarend alle Merkmale und Schritte des Oberbegriffes der Ansprüche 1, 4 und 14) zeigt einen Vertreter dieser speziellen Schweißvorrichtungen. Diese Art von Schweißvorrichtungen finden besonders im medizintechnischen oder lebensmitteltechnischen Bereich Anwendung, wo es auf schutzgasgeschweißte, hochwertige Schweißnähte unter Verwendung rostfreier Stähle ankommt bei oft auch sehr kleinen Rohrdurchmesser (wenige cm). Dementsprechend zeichnet sich diese Bauform durch kompakte Maße und Handlichkeit aus.

Aus der EP 3 650 157 A1 (nachveröffentlichtes Dokument) geht eine Orbitalschweißvorrichtung mit einem Orbitalschweißkopf hervor, bei dem Belastungswerte in einer im Orbitalschweißkopf angeordneten Speichereinrichtung gespeichert werden können. Die Belastungswerte können die spezifische Belastung des Orbitalschweißkopfes oder der Elektrode angeben. Mittels der Belastungswerte kann dem Benutzer die Notwendigkeit einer Wartung oder eines Ersatzes von Teilen signalisiert werden.

Die DE 10 2012 223 214 A1 und EP 3 424 633 A1 betreffen Schweißbrenner mit austauschbaren Schweißelektroden, wobei die Betriebszeiten überwacht werden.

Der Erfindung liegt die Aufgabe zugrunde Orbitalschweißköpfe, eine Orbitalschweißvorrichtung und ein Verfahren zum Orbitalschweißen derart weiter zu entwickeln, dass eine Schweißnaht mit zuverlässig mit hoher Qualität erzeugt werden kann und Fehler beim Schweißen vermieden werden.

Die Aufgabe wird durch die unabhängigen Patentansprüche gelöst, d.h. Orbitalschweißköpfe für eine Orbitalschweißvorrichtung entsprechend Ansprüche 1 und 4, eine Orbitalschweißvorrichtung mit einem solchen Kopf entsprechend Anspruch 11, und ein Verfahren zum Betreiben einer Orbitalschweißvorrichtung entsprechend Anspruch 14. Vorteilhafte Ausgestaltungen sind in den jeweiligen Unteransprüchen angegeben.

Ein erfindungsgemäßer Orbitalschweißkopf für eine orbitale Schweißvorrichtung ist zum Anschließen mittels eines Kabels an eine Schweißstromquelle in einem Schweißstromquellengehäuse ausgebildet, welche mit einem Basiscontroller versehen ist. Der Orbitalschweißkopf weist eine Rohrhalterung und einen gegenüber der Rohrhalterung drehbar gelagerten Schweißelektrodenhalter zur Halterung einer Schweißelektrode auf. Die Orbitalschweißvorrichtung weist einen Motor auf, welcher eingerichtet ist, den Schwei-ßelektrodenhalter anzutreiben und ihn so gegenüber der Rohrhalterung zu verdrehen, wobei der Orbitalschweißkopf eine Kammer für Schutzgas aufweisen kann, welche ausgebildet ist, während eines Schweißprozesses die Schweißelektrode des Orbitalschweißkopfes zu umgeben und nach außen hin im Wesentlichen abzuschließen. Der Orbitalschweißkopf ist mit einer elektrischen Schaltung versehen.

Die Erfindung zeichnet sich der Orbitalschweißkopf dadurch aus, dass die elektrische Schaltung eine Speichereinrichtung aufweist, welche im Orbitalschweißkopf angeordnet ist, um einen oder mehrere Elektrodenbelastungswerte der Schweißelektrode zu speichern und die elektrische Schaltung des Orbitalschweißkopfes ist derart ausgebildet, dass anhand der Elektrodenbelastungswerte ein Wartungszustandswert der Schweißelektrode bestimmt wird, der ein Maß für den Verschleiß der Schweißelektrode angibt, wobei der eine oder die mehreren Elektrodenbelastungswerte einen oder mehrere der folgenden Parameter umfassen:
- gemessene Spannung an der Schweißelektrode in Kombination mit dem angelegten Strom, und/oder
- gemessenen Widerstand an der Elektrode.
- Anhand der aktuell gemessenen Spannung kann unter Berücksichtigung des angelegten Schweißstromes unmittelbar der Zustand der Schweißelektrode bestimmt werden. Es kann jedoch auch Sinn machen, bei jedem einzelnen Schweißvorgang die Spannung absolut oder im Verhältnis zum Schweißstrom aufzunehmen und zu speichern, um so anhand der Entwicklung der Spannung gegenüber dem Strom die Veränderung des Zustandes der Schweißelektrode verfolgen zu können.
- Der an der Elektrode gemessene Widerstand ist das Verhältnis aus der gemessenen Spannung und des angelegten Schweißstromes. Dieser Widerstand umfasst den Leitungswiderstand und den Lichtbogenwiderstand. Sofern kein grundsätzlicher Defekt an der Orbitalschweißvorrichtung vorliegt, kann der Leitungswiderstand im Wesentlichen als konstant angenommen werden. Gemessene Änderungen des Widerstandes bedeuten daher vor allem Änderungen des Lichtbogenwiderstandes. Wenn sich der Widerstand signifikant verändert, dann bedeutet dies einen hohen Verschleiß an der Elektrode.

Die elektrische Schaltung kann ausgebildet sein, um einen oder mehrere Elektrodenbelastungswerte der Schweißelektrode zu speichern und die elektrische Schaltung des Orbitalschweißkopfes und/oder der Basiscontroller derart ausgebildet sind, dass zunächst ein oder mehrere Elektrodenbelastungswerte als Referenzwerte gespeichert werden und der Verschleiß der Schweißelektrode durch Vergleichen eines oder mehrerer weiterer Elektrodenbelastungswerte mit dem oder den Referenzwerten bestimmt wird.

Die Schweißelektrode ist das wichtigste Verschleißteil einer solchen Orbitalschweißvorrichtung. Sie muss in der Regel in regelmäßigen Abständen ausgetauscht werden. Herkömmliche Orbitalschweißvorrichtungen besitzen einen Basiscontroller mit "viel" Intelligenz, d.h., einem Prozessor und einer Speichereinrichtung, in welcher Daten der Orbitalschweißvorrichtung gespeichert und ausgewertet werden können. Grundsätzlich wäre es möglich, mit einem Basiscontroller den Schweißstrom zu erfassen und anhand dessen die Elektrodenbelastung und den Wartungszustand der Schweißelektrode zu beurteilen. Praktisch macht dies jedoch wenig Sinn, da an ein Schweißstromquellengehäuse unterschiedliche Orbitalschweißköpfe je nach Rohrdurchmesser der zu verschweißenden Rohre angeschlossen werden. Dies heißt, dass es keine eindeutige Zuordnung von Orbitalschweißköpfen zu Schweißstromquellengehäuse gibt. Die Orbitalschweißköpfe werden durchgetauscht und auch an unterschiedliche Schweißstromquellengehäuse angeschlossen. Damit kann nicht gewährleistet werden, dass der an einem Schweißstromquellengehäuse angeordneten Basiscontroller alle mit einem bestimmten Orbitalschweißkopf durchgeführte Schweißvorgänge überwachen kann, denn der Orbitalschweißkopf kann auch an einen anderen Orbitalschweißkopfquellengehäuse mit einem anderen Basiscontroller angeschlossen werden. Selbst wenn eine eindeutige Identifizierung des Orbitalschweißkopfes durch den Basiscontroller möglich ist, kann dieser nicht den tatsächlichen Belastungszustand des Orbitalschweißkopfes bzw. dessen Schweißelektrode erfassen.

Dieses Problem wird bei der Erfindung dadurch gelöst, dass die Speichereinrichtung zum Speichern der Elektrodenbelastungswerte am Orbitalschweißkopf vorgesehen ist. So können die entsprechenden Elektrodenbelastungswerte am Orbitalschweißkopf gespeichert werden, unabhängig davon, mit welchem Schweißstromquellengehäuse der Orbitalschweißkopf verbunden ist. Die Elektrodenbelastungswerte können vom Basiscontroller an der Schweißstromquelle und/oder am Orbitalschweißkopf erzeugt werden. Dies wird unten näher erläutert. Dadurch, dass die Elektrodenbelastungswerte am Orbitalschweißkopf selbst gespeichert werden, können sie bei jedem Schweißvorgang, egal an welchem Schweißstromquellengehäuse der Orbitalschweißkopf angeschlossen ist, mitgenommen und ergänzt werden. Hierdurch ist eine vollständige Erfassung aller Elektrodenbelastungswerte möglich und es kann ein korrekter Wartungszustand der Schweißelektrode bestimmt werden.

Bei dem Verfahren nach dem zweiten Aspekt ist vorteilhaft, dass es für unterschiedliche Schweißelektroden und unterschiedliche Schweißprogramme zum Orbitalschweißen geeignet ist, ohne dass es hierfür spezifisch angepasst werden muss. Zudem werden Alterungserscheinungen der Schweißvorrichtung, wie z.B. ein sich mit der Zeit verändernder Widerstand eines Kabels zwischen dem Orbitalschweißkopf und dem Schweißstromquellengehäuse kompensiert.

Die Elektrodenbelastungswerte können einen oder weitere der folgenden Parameter umfassen:
- Die gesamte elektrische Arbeit, welche an der Schweißelektrode geleistet wird oder die gesamte elektrische Ladung, welche durch die Schweißelektrode fließt. Beides sind Messgrößen, welche ein Maß für die Dauerbelastung der Schweißelektrode sind. Ab Erreichen vorbestimmter, empirisch ermittelter Schwellwerte ist die Schweißelektrode auszutauschen.
- Die gesamte elektrische Wirkarbeit, welche von der Schweißelektrode geleistet wird. Die elektrische Wirkarbeit ist beim Anlegen von Wechselstrom an die Schwei-βelektrode ein sehr aussagekräftiger Elektrodenbelastungswert.
- Der maximale Strom pro Schweißvorgang oder die elektrische Ladung pro Schweißvorgang oder die elektrische Arbeit bzw. Wirkarbeit pro Schweißvorgang. Diese für den einzelnen Schweißvorgang spezifische Elektrodenbelastungswerte können erfasst und gespeichert und statistisch ausgewertet werden.
- Die gesamte Betriebszeit. Die gesamte Betriebszeit, mit welcher die Elektrode betrieben wird, also die Zeit, an der durch die Schweißelektrode Strom fließt, ist ein sehr signifikanter Elektrodenbelastungswert. Ab Erreichen eines vorbestimmten, empirischen Schwellenwert für die gesamte maximale Betriebszeit einer Schweißelektrode ist diese auszutauschen.

Grundsätzlich ist die gemessene Spannung in Kombination mit dem angelegten Strom der bevorzugte Elektrodenbelastungswert. Die Spannung in Bezug zum Strom ist ein Maß für den Lichtbogenwiderstand. Der Lichtbogenwiderstand verhält sich bei Strömen von mehr als 20 A annähernd linear zum Abstand zwischen der Spitze der Schwei-βelektrode und dem zu verschweißenden Objekt und ist somit etwa proportional zur Länge des Lichtbogens. Bei einer Orbitalschweißvorrichtung, bei welcher die Elektrode nicht automatisch nachjustiert wird, wie es vorliegend der Fall ist, wird durch Materialabtrag die Spitze der Schweißelektrode beim Schweißen verändert. Hierdurch vergrößert sich der Abstand zwischen der Spitze und dem zu verschweißenden Objekt. Dies führt zu einer Spannungserhöhung.

Die Spitzen der Schweißelektroden sind mit einem vorbestimmten Winkel geschliffen, der sich je nach Elektrode unterscheiden kann. Durch den Materialabtrag wird die Spitze stumpfer. Dies führt zu einer Verbreiterung des Lichtbogens und zu einer Erhöhung der gemessenen Spannung.

Es gibt somit zwei Ursachen, der zunehmende Abstand und die sich verändernde Form der Spitze, welche zu einer Erhöhung der gemessenen Spannung bei konstantem Strom führen.

In einer sehr einfachen Ausführungsform werden als Wartungszustandswerte lediglich Werte der gemessenen Spannung für eine vorgegebene konstante Stromstärke als Wartungszustandswerte gespeichert.

Diese Wartungszustandswerte können bspw. auf zweierlei Weise überwacht und ausgewertet werden:
1. Es kann der Verlauf der Spannungsänderung über die Anzahl der Schweißvorgänge oder über die Streckenenergie oder über die Zeit erfasst werden. Dieser Verlauf ist, sofern die Schweißelektrode in Ordnung ist, im Wesentlichen linear. Weicht der Verlauf von einem linearen Verlauf ab, dann bedeutet dies, dass ein erheblicher Verschleiß an der Elektrode vorliegt. Je nach Auswahl des Wartungszustandswertes kann der Verlauf auch eine andere Funktion als eine lineare Funktion, wie z.B. eine exponentiell verlaufende oder hyperbolisch verlaufende Funktion aufweisen. Diese Funktion liegt in der Natur der Messgröße, welche als Wartungszustandswert verwendet wird.
2. Bei Über- oder Unterschreiten eines vorbestimmten Schwellenwertes des Wartungszustandswertes wird dies als ein erheblicher Verschleiß an der Elektrode beurteilt.

Anwender von Orbitalschweißvorrichtungen haben unterschiedliche Anforderungen an die Schweißnaht. Bei gewissen Anwendungen, wie z.B. bei Rohren zum Transport von Lebensmitteln müssen die Schweißnähte sehr rein sein, d.h., dass beim Schweißen keine Verunreinigungen in das Rohr eingebracht werden dürfen. Die Innenfläche der Schweißnähte soll zudem glatt sein, so dass sich keine Depots von Verunreinigungen ansammeln. Es gibt andererseits Anwendungen, bei welchen die Festigkeit der Schweißnaht im Vordergrund steht. Die Oberfläche kann hierbei rau sein. Beim Schwei-ßen von Rohren aus Edelstahl für Handläufe muss hingegen die Außenfläche der Schweißnaht optisch glatt und die Schweißnaht sollte möglichst schmal sein.

Daher sind die Abweichung vom linearen Verlauf, welcher als nicht tolerierbarer Verschleiß zu bewerten ist, und der Schwellenwert von den einzelnen Anwendern empirisch vom Anwender gemäß seinen Anforderungen festzulegen. Ist einer oder sind beide dieser empirischen Werte einmal festgelegt, dann kann ein Nutzer die Lebensdauer einer Schweißelektrode wesentlicher effizienter ausnützen. Er kann bei sehr anspruchsvollen Schweißnähten immer eine optimale Elektrode im Einsatz haben oder bei geringeren Anforderungen an die Schweißnaht die Lebensdauer der Schweißelektrode maximal ausnutzen.

Hierdurch können die Kosten und der Zeitaufwand für den notwendigen Wechsel der Schweißelektroden optimiert werden, so dass gegenüber dem herkömmlichen Wechsel zu festen Wechselintervallen nach bspw. 50 bis 100 Schweißnähte, eine erhebliche Kostenoptimierung bei Aufrechterhaltung der gewünschten Schweißqualität erzielt wird.

Bei einer Fehlbedienung des Schweißkopfes, bei welcher dieser mit noch glühender Schweißelektrode geöffnet wird, so dass die Schweißelektrode mit der Umgebungsatmosphäre in Kontakt kommt, wird die Schweißelektrode hierdurch beschädigt. Beim nächsten Schweißvorgang wird die Beschädigung der Schweißelektrode festgestellt, da die Spannung schlagartig bei gleichem Strom zunimmt. Dies führt zu einer erheblichen Abweichung eines linearen Verlaufes der Schweißspannung (siehe 1.) und führt bei einer erheblichen Beschädigung der Schweißelektrode zu einer Überschreitung des Schwellenwertes (siehe 2.). Daher kann eine solche Fehlbedienung unverzüglich erkannt werden. Es kann auch erkannt werden, wenn die Schweißelektrode aufgrund einer mangelhaften Zuführung von Schutzgas, welche unterschiedliche Ursachen haben kann, beschädigt wird.

Bei Verwendung eines oder mehrerer Referenzwerte kann ein Schwellenwert durch einen Faktor vorgegeben, der mit dem Referenzwert multipliziert wird und so den Schwellenwert ergibt. Ist dieser Faktor, beispielsweise 0,8 oder 1,2, dann bedeutet dies, dass der Schwellenwert das 0,8-fache bzw. 1 ,2-fache des entsprechenden Referenzwertes beträgt. Es können auch mehrere Schwellenwerte vorgesehen, welche jeweils einer Alarm- bzw. Warnstufe zugeordnet sind. Beim Über- oder Unterschreiten eines der Schwellenwerte wird dann ein entsprechendes Alarm- oder Warnsignal ausgegeben. Diese Faktoren können einmal vom Anwender festgelegt werden und dann auf unterschiedliche Schweißelektroden und/oder unterschiedliche Schweißprogramme angewendet werden. Wobei es auch zweckmäßig sein kann für gewisse Gruppen von Schweißelektroden und/oder Gruppen von Schweißprogrammen jeweils unterschiedliche Schwellenwerte bzw. unterschiedliche Schwellen für Abweichungen von Verläufen bzw. unterschiedliche Faktoren zum Bestimmen der Schwellenwerte und/oder Schwellen für Abweichung anhand des bzw. der Referenzwerte vorzuhalten.

Bei einer automatische Überwachung des Verschleißes der Schweißelektrode kann ein Bediener gleichzeitig mehrere Orbitalschweißvorrichtungen bedienen, wobei ein durch den Verschleiß einer der Schweißelektroden entstehendes Problem zuverlässig und rechtzeitig feststellen kann.

Der Orbitalschweißkopf kann ein Überwachungsmodul, mit dem selbsttätig das Abspeichern von einem vorbestimmten Verlauf und/oder das Unter- oder Überschreiten überwacht wird, aufweisen. Beim Feststellen eines nicht akzeptablen Verschleißes wird eine Warnmeldung erzeugt. Die Warnmeldung kann mit einer entsprechenden Ausgabeeinrichtung unmittelbar am Orbitallschweißkopf, beispielsweise durch ein akustisches und/oder optisches Signal, ausgegeben werden. Das Überwachungsmodul ist vorzugsweise derart ausgebildet, dass ein Abweichungsschwellenwert für eine vorbestimmte Abweichung des Verlaufes der ermittelten Wartungszustandswerte und/oder ein Schwellenwert für das Über- oder Unterschreiten dieses Schwellenwertes durch die ermittelten Wartungszustandswerte festlegbar beziehungsweise veränderbar ist. Hierdurch kann ein Benutzer des Orbitalschweißkopfes festlegen, wann eine Warnmeldung ausgegeben werden soll und so den Betrieb des Orbitalschweißkopfes an seiner individuellen Anforderung an die Qualität und Wirtschaftlichkeit des Schweißprozesses anpassen.

Ein solches Überwachungsmodul kann auch am Basiscontroller vorgesehen sein, wenn eine Datenverbindung zwischen den Basiscontroller und dem Orbitalschweißkopf besteht, sodass der Basiscontroller, die im Orbitalschweißkopf gespeicherten Wartungszustandswerte auslesen und verarbeiten kann.

Der Verlauf der ermittelten Wartungszustandswerte kann über die Schweißvorgänge oder über die Streckenenergie oder über die Zeit erfasst werden. Bei einer Erfassung der Zustandswerte über die Schweißvorgänge kann beispielsweise pro Schweißvorgang ein Wartungszustandswert oder jeweils mehrere Wartungszustandswerte erfasst werden.

Als ein Schweißvorgang wird ein vollständiges Verschweißen von zwei Rohrenden bezeichnet, das heißt, dass eine Schweißnaht zwischen zwei Rohrenden vollständig erzeugt wird. Wenn mehrere Wartungszustandswerte bei einem Schweißvorgang erfasst werden, dann werden sie vorzugsweise, vorbestimmten Punkten des Schweißvorganges zugeordnet, wie zum Beispiel dem Anfang, der Mitte oder dem Ende. Diese Zuordnung der einzelnen Wartungszustandswerte innerhalb eines Schweißvorganges kann durch die abgelaufene Zeit seit Beginn der Schweißvorganges und/oder durch eine festgestellte Winkelposition der Schweißelektrode im Orbitalschweißkopf erfolgen.

Da bei vielen Orbitalschweißprozessen die Stromstärke während eines Schweißvorganges, bei dem die Schweißelektrode einmal um die zusammenzuschweißenden Rohre geführt wird, variiert wird, kann es zweckmäßig sein, sowohl die Spannung als auch den angelegten Strom zu erfassen und die Spannung bzgl. des entsprechenden Stromwertes auszuwerten.

Dieses Verfahren wird vorzugsweise beim WIG-Schweißprozess (Wolfram Inert Gas), bei welchem eine Schweißelektrode aus einer Wolframlegierung und ein entsprechendes Inertgas verwendet wird, eingesetzt.

Vorzugsweise weist der Orbitalschweißkopf eine Rücksetzeinrichtung zum Zurücksetzen des einen oder der mehreren Elektrodenbelastungswerte beim Austausch einer Schweißelektrode auf. Die Rücksetzeinrichtung kann derart ausgebildet sein, dass beim Austausch einer Schweißelektrode alle bisher gespeicherten Elektrodenbelastungswerte gelöscht werden. Sie kann jedoch auch derart ausgebildet sein, dass ein neuer Datensatz für die neue Schweißelektrode angelegt wird. Letzteres ist bevorzugt, denn hierdurch werden Daten bisher verwendeter Schweißelektroden vorgehalten und über die gesamte Benutzungsdauer des Orbitalschweißkopfes erfasst, so dass auch eine Beurteilung der Belastung des gesamten Orbitalschweißkopfes erfolgen kann. Die Rücksetzeinrichtung kann zur manuellen Betätigung ausgebildet sein, wobei man sich vorzugsweise mittels eines Autorisierungscodes autorisieren muss, um die Rücksetzeinrichtung betätigen zu können. Die Schweißelektroden können jedoch auch mit einer maschinenlesbaren Codierung versehen sein. Dann werden beim Austauschen einer Schweißelektrode die Elektrodenbelastungswerte mittels der Rücksetzeinrichtung automatisch zurückgesetzt.

Der Orbitalschweißkopf kann mit einer Ausgabeeinrichtung versehen sein, um einen Wartungszustand der im Orbitalschweißkopf befindlichen Schweißelektrode anzuzeigen. Diese Ausgabeeinrichtung kann eine optische Ausgabeeinrichtung sein, wie zum Beispiel Leuchtelemente, wie zum Beispiel Leuchtdioden, oder ein Bildschirm. Die Ausgabeeinrichtung kann jedoch auch eine akustische Ausgabeeinrichtung zum Ausgeben eines akustischen Warnsignals umfassen.

Der Orbitalschweißkopf kann eine Kommunikationseinrichtung zum Kommunizieren mit dem Basiscontroller über eine bidirektionale digitale Datenverbindung aufweisen. Hierdurch können der Orbitalschweißkopf und der Basiscontroller gegenseitig Informationen austauschen. Dies ist sehr vorteilhaft, denn eine Vielzahl von Parametern liegen am Basiscontroller ohnehin vor, welche eine Aussage über den Wartungszustand der Schwei-βelektrode erlauben und somit als Elektrodenbelastungswerte geeignet sind. Der Basiscontroller gibt beispielsweise die Stromstärke des Schweißstromes vor, so dass die Stromstärke des Schweißstromes am Basiscontroller vorhanden ist. Durch die digitale Datenverbindung kann die aktuelle Stromstärke an den Orbitalschweißkopf übermittelt und dort als Elektrodenbelastungswert abgespeichert werden. Es ist daher nicht notwendig, am Orbitalschweißkopf einen separaten Stromsensor vorzusehen.

Weitere Parameter, welche als Elektrodenbelastungswerte geeignet sind, sind alle Parameter, mit welchen der Basiscontroller die Zuführung des Schutzgases steuert. Auch diese Parameter können an den Orbitalschweißkopf übermittelt und dort als Elektrodenbelastungswerte gespeichert werden. Wird beispielsweise wenig Schutzgas zugeführt, dann bedeutet dies einen wesentlich stärkeren Verschleiß der Schweißelektrode im Vergleich zu einem Schweißvorgang, bei dem die übliche Menge an Schutzgas zugeführt wird. Dies kann für die Beurteilung des Wartungszustandes der Schweißelektrode von Bedeutung sein.

An dem Orbitalschweißkopf können jedoch auch unmittelbar Sensoren zum Überwachen des Schweißvorganges, wie zum Beispiel ein Temperatursensor, ein Gassensor, etc. vorgesehen sein. Wenn keine Datenverbindung zum Basiscontroller besteht, dann kann es auch zweckmäßig sein, einen Stromsensor, wie z.B. einen Hallsensor, am Orbitalschweißkopf vorzusehen, um den Schweißstrom zu messen. Diese Sensoren können unmittelbar am Orbitalschweißkopf ausgelesen und deren Sensorwerte als Elektrodenbelastungswerte abgespeichert werden. Vorzugsweise weist der Orbitalschweißkopf einen Prozessor auf, mit dem die erfassten Sensorwerte aufbereitet und ausgewertet werden. Durch eine derartige Aufbereitung der Sensorwerte kann die abzuspeichernde Datenmenge erheblich reduziert werden. Bei dieser Aufbereitung erfolgt vorzugsweise eine statistische Auswertung, mit welcher ein Mittelwert, ein Medianwert, Maximal- und/oder Minimalwerte, Integrale über die Zeit der Werte bestimmt werden.

Ein weiterer Aspekt der vorliegenden Erfindung betrifft eine Orbitalschweißquelle mit einer Schweißstromquelle in einem Schweißstromquellengehäuse, welche mit einem Basiscontroller versehen ist. Die Orbitalschweißvorrichtung zeichnet sich durch einen oben beschriebenen Orbitalschweißkopf aus. Der Basiscontroller kann in das Schweißstromquellengehäuse integriert sein oder auch mit einem separaten Gehäuse ausgebildet und mit dem Schweißstromquellengehäuse verbunden sein.

Vorzugsweise weist der Basiscontroller eine Basiskommunikationseinrichtung zum Kommunizieren über die bidirektionale, digitale Datenverbindung mit der Kommunikationseinrichtung des Orbitalschweißkopfes auf. Der Basiscontroller ist zum Einlesen eines oder mehrerer Elektrodenbelastungswerte ausgebildet, welche am Basiscontroller und/oder an der Schweißstromquelle vorliegen und/oder an der Schweißstromquelle mittels einem oder mehreren Sensoren gemessen werden, und der Elektrodenbelastungswerte an dem Orbitalschweißkopf. Hierdurch kann der Basiscontroller Elektrodenbelastungswerte an den Orbitalschweißkopf übermitteln, der sie in seiner Speichereinrichtung speichert.

Der Basiscontroller kann bei der Ausführung eines Schweißprogrammes den durch den bzw. die im Orbitalschweißkopf gespeicherten Elektrodenbelastungswerte definierten Wartungszustand der Schweißelektrode berücksichtigen. Ein Schweißprogramm kann an den Wartungszustand der Schweißelektrode angepasst werden und/oder bei der Auswahl eines von mehreren Schweißprogrammen kann der Wartungszustand der Schweißelektrode berücksichtigt werden. Beispielsweise kann in Abhängigkeit des Wartungszustandes der Schweißelektrode der maximale Schweißstrom begrenzt werden. Dem entsprechend ist auch die Schweißgeschwindigkeit bzw. die Geschwindigkeit, mit welcher der Schweißelektrodenhalter im Orbitalschweißkopf bewegt wird, einzustellen. Das Schweißprogramm kann somit in Abhängigkeit des Wartungszustandes der Schweißelektrode parametrisiert sein.

Gemäß einem weiteren Aspekt der vorliegenden Erfindung ist ein Verfahren zum Betreiben einer Orbitalschweißvorrichtung vorgesehen, wobei von einer Schweißstromquelle mittels eines Kabels Strom an einen Orbitalschweißkopf geleitet wird, ein Schweißelektrodenhalter am Orbitalschweißkopf mittels eines Motors angetrieben und gegenüber einer Rohrhalterung des Orbitalschweißkopfes verdreht wird. Während eines Schweißprozesses wird eine Schweißelektrode des Orbitalschweißkopfes, welche vom Schwei-ßelektrodenhalter gehalten wird, durch eine Kammer für Schutzgas umgeben und nach außen hin im Wesentlichen abgeschlossen.

Dieses Verfahren definiert weiter, dass mittels einer elektrischen Schaltung ein oder mehrerer Elektrodenbelastungswerte einer Schweißelektrode in einer Speichereinrichtung, welche im Orbitalschweißkopf angeordnet ist, gespeichert werden, und mittels der elektrischen Schaltung des Orbitalschweißkopfes anhand der Elektrodenbelastungswerte ein Wartungszustand der Schweißelektrode bestimmt wird, der ein Maß für den Verschleiß der Schweißelektrode angibt.

Dieses Verfahren kann sich auch dadurch auszeichnen, dass
mittels einer elektrischen Schaltung ein oder mehrere Elektrodenbelastungswerte einer Schweißelektrode in einer Speichereinrichtung gespeichert werden, welche im Orbitalschweißkopf angeordnet ist, und zunächst ein oder mehrere Elektrodenbelastungswerte als Referenzwerte gespeichert werden und der Verschleiß der Schweißelektrode durch Vergleichen eines oder mehrerer weiterer Elektrodenbelastungswerte mit dem oder den Referenzwerten bestimmt wird.

Bei diesem Verfahren wird vorzugsweise ein oben beschriebener Orbitalschweißkopf und/oder eine oben beschriebene Orbitalschweißvorrichtung verwendet.

Das Kabel kann eine Mindestlänge von 1m, bevorzugt 2m, besonders bevorzugt 5m haben. Die Rohrhalterung ist bevorzugt eine zangenartige Klemmhalterung. Die Schweißstromquelle ist bevorzugt stationär, während der Orbitalschweißkopf manuell portabel ist.

Die Kammer ist bevorzugt derart ausgestaltet, dass die Rohrstücke, welche aneinandergeschweißt werden sollen, an den zu verbindenden Enden von der Kammer umschlossen sind. Die Kammer kann einen Eingang, z.B. mit einem Schlauchanschluss, für Schutzgas, mit welchem die Kammer somit gefüllt werden kann, aufweisen. Die vorher vorhandene Luft wird dabei dann durch die zuvor genannten kleinen Spalte oder Öffnungen aus der Kammer gedrängt. Die Kammer kann auch einen dedizierten Gasausgang aufweisen.

Die Kammer ist bevorzugt derart gestaltet, dass die Schweißelektrode in der Kammer um die zu verschweißenden Rohrstücke gedreht werden kann.

Unter einem Sensor wird erfindungsgemäß eine Einrichtung zur Erfassung einer physikalischen Größe und Umwandlung in ein elektrisches Signal verstanden.

Bevorzugt weist der Orbitalschweißkopf ein Gehäuse auf, welches an die Kammer angrenzt und welches z.B. für einen Benutzer einen Griff oder ein Gehäuse für Bedien- oder Schaltelemente und/oder den Motor bildet, und die elektrische Schaltung ist in dem Gehäuse angeordnet.

Ein Wert ist eine Information über ein bestimmtes Ausmaß einer technischen Größe. Bevorzugt ist der Wert der als Zustand elektrischer Spannungen, Magnetisierungen oder optischer Zustände, bevorzugt digital, verkörpert/codiert. Bevorzugt liegt ein Wert zeitabhängig in Form eines technischen Signals, z.B. ein elektrisches, (elektro-)magnetisches, optisches und/oder akustisches analoges, bevorzugt digitales Signal vor. Ein Wert und auch ein entsprechendes Signal kann eine oder mehrere Dimensionen aufweisen und somit einen Wertvektor definieren. Ein Messwert ist ein Wert, welcher durch einen Sensor bestimmt wird.

Der Basiscontroller kann derart ausgebildet sein, dass ein gespeichertes Schweißprozessprogramm aus einem Speicher geladen werden kann, um den Schweißprozess zu Steuern oder zu Regeln.

Der Orbitalschweißkopf kann einen Lagesensor aufweisen, der dazu ausgebildet ist, einen Lagewert zu erzeugen. Der Lagesensor ist bevorzugt ein Gyroskop-Sensor. Der Lagesensor ist derart ausgebildet, dass er eine Lage oder Lageänderung bezüglich mindestens einer, bevorzugt zwei, besonders bevorzugt drei unterschiedlicher Raumachsen messen kann.

Das Schweißprozessprogramm beinhaltet bevorzugt eine Tabelle oder Funktion, bei welcher für eine bestimmte Winkelposition der Schweißelektrode relativ zum Schwei-ßelektrodenhalter ein oder mehrere Parameter (z.B. Stromstärke) zur Regelung oder Steuerung der Schweißstromquelle hinterlegt oder berechnet werden.

Bei einer weiteren Ausführungsform der Orbitalschweißvorrichtung ist vorgesehen, dass die elektrische Schaltung eingerichtet ist,
a) eine Anzahl und/oder eine Dauer und/oder einen Maximalstrom und/oder einen sich über die Zeit, einer elektrischen Ladung entsprechenden, kumulierten Strom der mit der Schweißelektrode oder dem Orbitalschweißkopf durchgeführten Schweißprozesse und/oder Lichtbögen und/oder
b) eine Anzahl von bestimmten, z.B. einen oder verschiedene Schwellwerte überschreitende, Erschütterungen und/oder
c) eine Betriebsdauer des Motors
als einen oder mehrere Belastungswerte in der Speichereinrichtung zu speichern, welche die Belastung des Orbitalschweißkopfes beschreiben.

In einem weiteren erfindungsgemäßen Verfahren wird eine entsprechende Speicherung durchgeführt

Durch diese Belastungswerte ist eine gute Vorhersage von zu erwartenden Teileausfällen möglich.

Bei einer weiteren Ausführungsform der Orbitalschweißvorrichtung ist vorgesehen, dass die Orbitalschweißvorrichtung, bevorzugt der Orbitalschweißkopf, einen Belastungssensor aufweist und die elektrische Schaltung oder der Basiscontroller eingerichtet ist, aus einem Messwert des Belastungssensors einen oder mehrere der Belastungswerte zu bestimmen.

In einem weiteren erfindungsgemäßen Verfahren erfolgt eine entsprechende Bestimmung.

Hierdurch sind die Belastungswerte mittels der Orbitalschweißvorrichtung messbar.

Der Belastungssensor weist bevorzugt einen Stromsensor (z.B. Stromsensor des Motorstroms oder des in die Schweißelektrode geleiteten Stroms) und/oder einen Beschleunigungssensor (zur Messung der Erschütterungen) auf. Der Beschleunigungssensor ist bevorzugt ein Lagesensor. Bevorzugt ist es derselbe Sensor, welcher bereits als Lagesensor gemäß den vorangegangenen Weiterführungsbeispielen dient.

Der Belastungssensor besteht bevorzugt aus verschiedenen Elementen, die bevorzugt verteilt im Orbitalschweißkopf und dem Schweißstromquellengehäuse angeordnet sind.

Bei einer weiteren Orbitalschweißvorrichtung gemäß der Erfindung ist vorgesehen, dass der Orbitalschweißkopf den Belastungssensor zumindest teilweise aufweist, und wobei der Orbitalschweißkopf eine Batterie aufweist, und wobei der Orbitalschweißkopf eingerichtet ist, mit Hilfe der durch die Batterie bereitgestellten elektrischen Energie, den Teil des Belastungssensors, welchen der Orbitalschweißkopf aufweist, zu betreiben und einen oder mehrere der Belastungswerte mittels der elektrischen Schaltung in die Speichereinrichtung zu speichern.

In einem weiteren erfindungsgemäßen Verfahren erfolgt ein entsprechendes Betreiben des Belastungssensors und eine entsprechende Speicherung.

Hierdurch werden auch Belastungen des Orbitalschweißkopfs berücksichtigt, welche auftreten, wenn der Orbitalschweißkopf nicht an die Schweißstromquelle angeschlossen ist, z.B. während des Transports oder Lagerung.

Die Erfindung wird nun anhand von Zeichnungen beispielhaft weiter veranschaulicht werden. Hierbei zeigen:
Fig. 1 eine erste Ausführungsform einer erfindungsgemäßen Vorrichtung, und
Fig. 2 basierend auf der ersten Ausführungsform eine zweite Ausführungsform einer erfindungsgemäßen Vorrichtung.

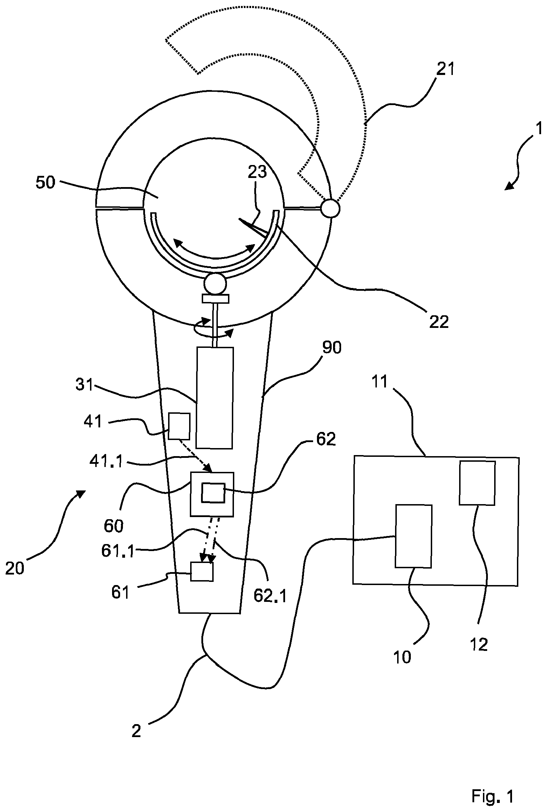

Es folgt eine detailliertere Beschreibung von Fig. 1. Die Ausgestaltung ist derart, dass die Orbitalschweißvorrichtung 1 eine Schweißstromquelle 10 in einem Schweißstromquellengehäuse 11 und darin einen Basiscontroller 12 aufweist und einen von dem Schweißstromquellengehäuse 11 separaten, an die Schweißstromquelle 10 mittels eines Kabels 2 angeschlossenen Orbitalschweißkopf 20, wobei der Orbitalschweißkopf 20 eine Rohrhalterung 21 und einen gegenüber der Rohrhalterung 21 drehbar gelagerten Schweißelektrodenhalter 22 zur Halterung der Schweißelektrode 23 aufweist, wobei die Orbitalschweißvorrichtung 1 einen, durch den Basiscontroller 12 der Orbitalschweißvorrichtung 1 angesteuerten, elektrischen Motor 31 aufweist, welcher eingerichtet ist, den Schweißelektrodenhalter 22 anzutreiben und ihn so gegenüber der Rohrhalterung 21 zu verdrehen, wobei der Orbitalschweißkopf 20 eine Kammer 50 für Schutzgas aufweist, welche eingerichtet ist, während eines Schweißprozesses eine Schweißelektrode 23 des Orbitalschweißkopfes 20 zu umgeben und nach außen hin im Wesentlichen abzuschließen, wobei der Orbitalschweißkopf 20 eine elektrische Schaltung 60 in Form eines digitalen Controllers aufweist
wobei die elektrische Schaltung 60 angeschlossen ist:
- an einen Lagesensor 41, den der Orbitalschweißkopf 20 in diesem Fall aufweist, wobei der Lagesensor 41 eingerichtet ist, einen Lagewert 41.1 zu erzeugen; und/oder
- an eine Speichereinrichtung 61, welche der Orbitalschweißkopf 20 in diesem Fall aufweist, wobei die elektrische Schaltung 60 eingerichtet ist, einen oder mehrere Belastungswerte 61.1 und/oder einen oder mehrere Elektrodenbelastungswerte 61.2 in die Speichereinrichtung 61 zu speichern.

Beim Betrieb der Orbitalschweißvorrichtung (1) ist vorgesehen, dass von der Schweißstromquelle 10 mittels des Kabels 2 Strom an den Orbitalschweißkopf 20 geleitet wird, wobei der Schweißelektrodenhalter 22 mittels des Motors 31 angetrieben und gegenüber der Rohrhalterung 21 des Orbitalschweißkopfs 20 verdreht wird, wobei während eines Schweißprozesses die Schweißelektrode 23 des Orbitalschweißkopfes 20 durch die Kammer 50 für Schutzgas umgeben und nach außen hin im Wesentlichen abgeschlossen wird, wobei die elektrischen Schaltung 60 des Orbitalschweißkopfes 20 betrieben wird,
wobei mittels der elektrischen Schaltung 60:
- der Lagewert 41.1, erzeugt durch den Lagesensor 41, den der Orbitalschweißkopf 20 in diesem Fall aufweist, verarbeitet wird; und/oder
- der eine oder die mehreren Belastungswerte 61.1, welche die Belastung des Orbitalschweißkopfes 20 an sich beschreiben und/oder der eine oder die mehreren Elektrodenbelastungswerte 62.1 in die Speichereinrichtung 61, welche die Belastung der Schweißelektrode 23 beschreiben, gespeichert werden.

Der Schweißstrom bzw. ein vom Schweißstrom abgeleiteter Wert kann sowohl für die Belastung des Orbitalschweißkopfes 20 als auch für die Belastung der Schweißelektrode 23 spezifisch sein, wohingegen die an der Schweißelektrode 23 anliegende Spannung über dem Lichtbogen vor allem für die Schweißelektrode 23 spezifisch ist. Die elektrische Schaltung 60 ist mit einem Modul 62 zum Bestimmen eines Elektrodenbelastungswertes 62.1 versehen. Der Elektrodenbelastungswert 62.1 beschreibt den Wartungszustand der Schweißelektrode, der ein Maß für den Verschleiß der Schweißelektrode (23) angibt.

Die Elektrodenbelastungswerte können einen oder mehrere der folgenden Parameter umfassen:
- Die an der Schweißelektrode gemessene Schweißspannung. Anhand der aktuell gemessenen Spannung kann unter Berücksichtigung des angelegten Schweißstromes unmittelbar der Zustand der Schweißelektrode bestimmt werden. Es kann jedoch auch Sinn machen, bei jedem einzelnen Schweißvorgang die Spannung absolut oder im Verhältnis zum Schweißstrom aufzunehmen und zu speichern, um so anhand der Entwicklung der Spannung gegenüber dem Strom die Veränderung des Zustandes der Schwei-βelektrode verfolgen zu können.
- Der an der Elektrode gemessene Widerstand. Dieser Widerstand ist das Verhältnis aus der gemessenen Spannung und des angelegten Schweißstromes. Wenn sich der Widerstand signifikant verändert, dann bedeutet dies einen hohen Verschleiß an der Elektrode.
- Die gesamte elektrische Arbeit, welche an der Schweißelektrode geleistet wird oder die gesamte elektrische Ladung, welche durch die Schweißelektrode fließt. Beides sind Messgrößen, welche ein Maß für die Dauerbelastung der Schweißelektrode sind. Ab Erreichen vorbestimmter, empirisch ermittelter Schwellwerte ist die Schweißelektrode auszutauschen.
- Die gesamte elektrische Wirkarbeit, welche von der Schweißelektrode geleistet wird. Die elektrische Wirkarbeit ist beim Anlegen von Wechselstrom an die Schwei-βelektrode ein sehr aussagekräftiger Elektrodenbelastungswert.
- Der maximale Strom pro Schweißvorgang oder die elektrische Ladung pro Schweißvorgang oder die elektrische Arbeit bzw. Wirkarbeit pro Schweißvorgang. Diese für den einzelnen Schweißvorgang spezifische Elektrodenbelastungswerte können erfasst und gespeichert und statistisch ausgewertet werden.
- Die gesamte Betriebszeit. Die gesamte Betriebszeit, mit welcher die Elektrode betrieben wird, also die Zeit, an der durch die Schweißelektrode Strom fließt, ist ein sehr signifikanter Elektrodenbelastungswert. Ab Erreichen eines vorbestimmten, empirischen Schwellenwert für die gesamte maximale Betriebszeit einer Schweißelektrode ist diese auszutauschen.

Aus einem oder vorzugsweise aus mehreren dieser Elektrodenbelastungswerte wird der Wartungszustandswert der Schweißelektrode 23 bestimmt. Der Wartungszustandswert ist vorzugsweise eine dimensionslose Größe, welche den Wartungszustand zwischen 1 und 0 bzw. zwischen 100% und 0% angibt, wobei 1 bzw. 100% eine unbenutzte Schweißelektrode 23 und 0 bzw. 0% eine verschlissene und auszutauschende Schwei-βelektrode bedeutet.

Die Elektrodenbelastungswerte sind physikalische Größen, welche entweder mit einem Sensor gemessen werden, wie zum Beispiel Spannung, Temperatur, Gasstrom, oder durch den Basiscontroller 12 vorgegebene physikalische Größen, wie zum Beispiel der Schweißstrom. Im vorliegenden Ausführungsbeispiel wird der zugeführte Schweißstrom vom Basiscontroller 12 geregelt. Es ist ein gepulster Gleichstrom mit Pulsen mit abwechselnden großer und kleiner Stromstärke, um so mit der Dauer der Pulse die mittlere Stromstärke gezielt einstellen zu können. Grundsätzlich sind mittlere Stromstärken von 5A bis 180A möglich. In der Regel werden mittlere Stromstärken im Bereich von 5A bis 100A angelegt.

Wie oben erläutert, wird der Wartungszustandswert vorzugsweise aus einem oder mehreren dieser Elektrodenbelastungswerte bestimmt. Ein Elektrodenbelastungswert kann jedoch auch unmittelbar als Wartungszustandswert verwendet werden. Dies gilt vor allem für die gemessene Spannung, beziehungsweise für den gemessenen Widerstand.

Aus der gemessenen Spannung kann bei konstanter Stromstärke, beziehungsweise vorgegebener Stromstärke, unmittelbar auf den Verschleißzustand der Schweißelektrode geschlossen werden. Gleiches gilt für den gemessenen Widerstand des Lichtbogens.

Eine dimensionslose Größe ist jedoch als Wartungszustandswert bevorzugt, da die Elektrodenbelastungswerte für unterschiedliche Schweißelektrodentypen unterschiedliche Aussagekraft über den Verschleißzustand besitzen.

Die bevorzugt verwendeten Schweißelektroden sind aus Wolfram bzw. einer Wolframlegierung ausgebildet. Sie können unterschiedlich geformt sein und sich insbesondere in der Form ihrer Spitze unterscheiden. Daher kann die Bestimmung des Wartungszustandes von dem Typ der Schweißelektrode abhängig sein und dementsprechend können unterschiedliche Algorithmen zum Bestimmen des Wartungszustandswertes für die Schweißelektrode 23 vorgesehen sein.

Mit diesen Algorithmen erfolgt eine Zuordnung der entsprechenden Elektrodenbelastungswerte zu dem Grad des Verschleißzustandes der entsprechenden Schweißelektrode, welcher durch den Wartungszustandswertes dargestellt wird.

Vorzugsweise wird der Wartungszustandswert anhand mehrerer Elektrodenbelastungswerte bestimmt.

Die Wartungszustandswert können grundsätzlich aus unterschiedlichen Kombinationen von der gemessenen Spannung des Schweißstroms und der Zeit bestimmt werden. Diese sind die bevorzugten Belastungselektrodenwerte zur Bestimmung der Wartungszustandswert. Es können jedoch noch weitere Elektrodenbelastungswerte alternativ oder in Kombination verwendet werden, wie zum Beispiel eine im Orbitalschweißkopf, insbesondere in der Kammer 50 gemessene Temperatur, der Schutzgasstrom und/oder die Anzahl der Schweißvorgänge.

Die elektrische Schaltung 16 umfasst vorzugsweise eine Mikroprozessorsteuerung welche durch ein oder mehrere Softwaremodule zum Ausführen von unterschiedlichsten Funktionen ausgebildet sein kann. Ein Überwachungsmodul 62 kann als ein solches Softwaremodul realisiert sein. Mit dem Überwachungsmodul 62 wird anhand der Wartungszustandswerte der Schweißelektrode überwacht, ob ein nicht akzeptabler Verschleiß der Schweißelektrode aufgetreten ist, um dann ein entsprechendes Alarm- bzw. Warnsignal auszugeben. Dieses Alarm- bzw. Warnsignal kann in mehreren Stufen ausgegeben werden, sodass dem Benutzer beispielsweise frühzeitig mitgeteilt wird, dass die Schweißelektrode 62 auszutauschen ist. Hierzu können unterschiedliche Schwellenwerte zum Auslösen der unterschiedlichen Alarm- und Warnsignal vorgesehen sein. Ab einem bestimmten Schwellenwert kann auch ein Alarm- bzw. Warnsignal ausgeben werden, das bedeutet, dass ein sofortiges Austauschen der Schweißelektrode erforderlich ist. Das Alarm- bzw. Warnsignal kann auch dazu führen, dass der Weiterbetrieb des Orbitalschweißkopfes automatisch unterbunden wird und erst nach Austausch der Schweißelektrode fortgesetzt werden kann.

Dies kann beispielsweise dann vorliegen, wenn das entsprechende Alarm-Warnsignal 62.1 an dem Basiscontroller 12 übermittelt wird, der dann eine weitere Stromzuführung unterbindet. Es kann jedoch auch im Orbitalschweißkopf selbst eine Schalteinrichtung vorgesehen sein, mit welcher die weitere Stromzuführung zur Schweißelektrode nach Auftreten ein solches Alarms- bzw. Warnsignals unterbunden wird.

Je nach Ausgestaltung kann die Vorrichtung 1 neben den Speicher 61 auch den Lagesensor 41 aufweisen.

Hier hat das Kabel 2 eine Mindestlänge von 2m. Die Rohrhalterung 21 ist eine zangenartige Klemmhalterung. Die Kammer 50 ist derart ausgestaltet, dass die Rohrstücke, welche aneinandergeschweißt werden sollen, an den zu verbindenden Enden von der Kammer 50 umschlossen sind. Die Kammer 50 weist einen Eingang, z.B. mit einem Schlauchanschluss, für Schutzgas auf, mit welchem die Kammer somit gefüllt werden kann. Die Kammer 50 ist derart gestaltet, dass die Schweißelektrode 23 in der Kammer 50 um die zu verschweißenden Rohrstücke gedreht werden kann. Hier weist der Orbitalschweißkopf 20 ein Gehäuse 90 auf, welches an die Kammer 50 angrenzt und welches z.B. für einen Benutzer einen Griff oder ein Gehäuse für Bedien- oder Schaltelemente und/oder den Motor 31 bildet, und die elektrische Schaltung 60 ist in dem Gehäuse 90 angeordnet.

Die Ausgestaltung ist derart, dass der Lagesensor 41 in ortsfester Relativlage zur Rohrhalterung 21 und in beweglicher Relativlage zum Schweißelektrodenhalter 22 angeordnet ist und der Lagewert 41.1 eine Orientierung der Rohrhalterung 21 bezüglich der Erdanziehungskraft repräsentiert. Hier ist der Lagesensor 41 in dem Gehäuse 90 angeordnet.

Die elektrische Schaltung 60 kann auch derart ausgebildet sein, dass folgende Belastungswerte 61.1, welche die Belastung des Orbitalschweißkopfes 20 an sich beschreiben, erfasst werden:,
a) eine Anzahl und/oder eine Dauer und/oder einen Maximalstrom und/oder einen sich über die Zeit, einer elektrischen Ladung entsprechenden, kumulierten Strom der mit der Schweißelektrode 23 oder dem Orbitalschweißkopf 20 durchgeführten Schweißprozesse und/oder Lichtbögen und/oder
b) eine Anzahl von bestimmten, z.B. einen oder verschiedene Schwellwerte überschreitende, Erschütterungen und/oder
c) eine Betriebsdauer des Motors 31.

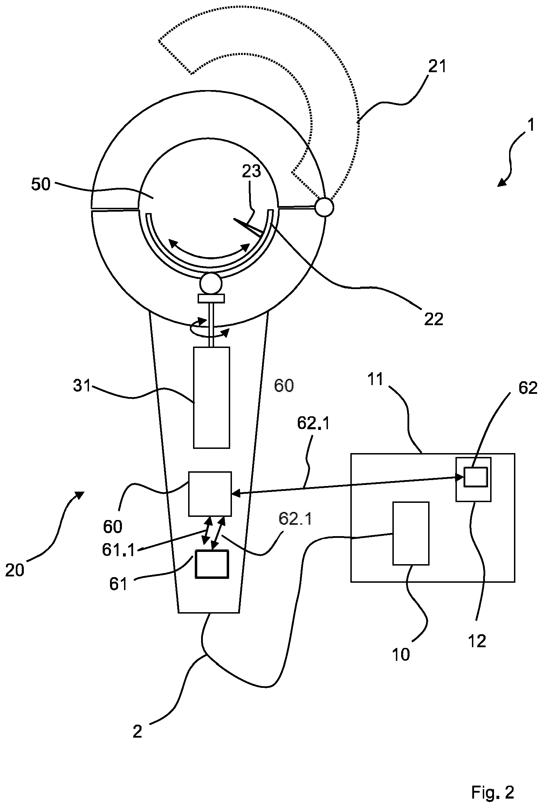

Gemäß einem weiteren Ausführungsbeispiel kann das Überwachungsmodul 62 auch am Basiscontroller 12 (Figur 2) vorgesehen sein. Zwischen dem Basiscontroller 12 und der elektrischen Schaltung ist eine bidirektionale digitale Datenverbindung ausgebildet, wobei sowohl am Basiscontroller 12 als auch an der elektronischen Schaltung 60 Kommunikationsschnittstellen vorgesehen sind, über welche der Basiscontroller 12 bzw. das Schweißstromquellengehäuse 11 mit der elektronischen Schaltung 60 bzw. dem Orbitalschweißkopf 20 bidirektional kommunizieren können. Hierdurch können die in der Speichereinrichtung 61 gespeicherten Elektrodenbelastungswerte 62.1 bzw. die davon abgeleiteten Wartungszustandswerte ausgelesen werden, um den Schweißelektrodenzustand zu überwachen.

Die bidirektionale Datenverbindung kann eine Funkdatenverbindung sein. Diese Funkdatenverbindung kann nach einem Funkstandard, wie z. B. Bluetooth oder W-LAN ausgebildet sein. Die bidirektionale Datenverbindung kann jedoch auch kabelgebunden sein, wobei vorzugsweise im Kabel 2 zusätzliche Datenleitungen integriert sind.

Das in Figur 2 dargestellte Ausführungsbeispiel weist im Gegensatz zu dem in Figur 1 gezeigten Ausführungsbeispiel keinen Lagesensor 41 auf. Im Rahmen der Erfindung ist es selbstverständlich auch möglich, dass der Orbitalschweißkopf 23 mit einem Lagesensor 41 versehen ist, wenn das Überwachungsmodul 62 im Basiscontroller 12 ausgebildet ist.

Im Rahmen der Erfindung ist es auch möglich, sowohl im Orbitalschweißkopf 23 als auch im Basiscontroller 12 jeweils ein Überwachungsmodul vorzusehen. So kann beispielsweise das Überwachungsmodul im Orbitalschweißkopf bestimmte Alarm- bzw. Warnsignale erzeugen, welche mit einer einfachen Anzeigeeinrichtung (z.B. einer oder mehrerer Leuchtioden) am Orbitalschweißkopf ausgegeben werden. Das Überwachungsmodul am Basiscontroller 12 kann komplexere Überwachungsalgorithmen ausführen, welche insbesondere ein Maß der noch verfügbaren Lebensdauer der Schwei-βelektrode 23 berechnen und ausgeben. Hierdurch kann ein Benutzer der Orbitalschweißvorrichtung 1 erkennen, wie lange die Schweißelektrode 23 noch benutzt werden kann und dies in die Planung seiner Schweißarbeiten einbeziehen.

Das bzw. die Überwachungsmodule 62 können derart ausgebildet sein, dass nach dem Einsetzen einer neuen Schweißelektrode 23, zunächst eine Referenz für die Elektrodenbelastungswerte 62.1 bzw. eine Referenz für die Wartungszustandswerte bestimmt werden, welche den Zustand zu Beginn der Benutzung dieser Schweißelektrode 23 beschreiben. Diese Referenzwerte werden in der Speichereinrichtung 61 gespeichert. Während der Lebensdauer der Schweißelektrode werden weitere Elektrodenbelastungswerte und Wartungszustandswerte ermittelt, wobei sie mit Bezug zu den Referenzwerten ausgewertet werden.

Diese Auswertung kann erfolgen, indem ein Über- oder Unterschreiten eines vorbestimmten Schwellenwertes bezüglich des Referenzwertes festgestellt wird. Der Schwellenwert ist beispielsweise durch einen Faktor vorgegeben, der mit dem Referenzwert multipliziert wird. Ist dieser Faktor, beispielsweise 0,8, dann bedeutet dies, dass der Schwellenwert das 0,8-fache des Referenzwertes beträgt.

Es können auch mehrere Referenzwerte zunächst erfasst werden, welche einen bestimmten Verlauf der Elektrodenbelastungswerte bzw. der Wartungszustandswerte definieren.

Weichen die gemessenen Elektrodenbelastungswerte bzw. Wartungszustandswerte von diesem Verlauf um einen vorbestimmten Betrag ab, dann kann das auch als ein nicht akzeptabler Verschleiß der Schweißelektrode bewertet werden, wie es oben erläutert ist.

Durch die Verwendung eines oder mehrerer Referenzwerte, welche zu Beginn der Lebensdauer der Schweißelektrode 23 erfasst werden, ist es möglich, das mit dem bzw. den Überwachungsmodulen ausgeführte Verfahren zum Überwachen der Schwei-βelektrode 23 unabhängig vom Typ der jeweiligen Schweißelektrode auszuführen. Denn bei unterschiedlichen Typen von Schweißelektroden werden unterschiedliche Referenzwerte ermittelt. Hierdurch werden unterschiedliche Schwellenwerte ermittelt, welche unter- bzw. überschritten werden können und/oder unterschiedliche Verläufe der Elektrodenbelastungswerte bzw. Wartungszustandswerte festgelegen, die den Betrieb des Orbitalschweißkopfes 20 mit einer korrekt funktionierenden Schweißelektrode 23 beschreiben.

Die Überwachung des Zustandes der Schweißelektrode 23 stellt sicher, dass die mit der Schweißvorrichtung erzeugten Schweißnähte, der vom jeweiligen Benutzer geforderten Qualität entsprechen.

Zudem kann oftmals die Benutzungsdauer der Schweißelektrode 23 im Vergleich zu herkömmlichen Verfahren, bei welchen die Schweißelektrode grundsätzlich nach einer bestimmten Anzahl von Schweißvorgängen ausgetauscht wird, verlängert werden, ohne dass die Qualität der Schweißnähte beeinträchtigt wird.

Bei Verwendung eines Lagesensors 41 kann es auch zweckmäßig sein, im Orbitalschweißkopf 20 eine Batterie vorzusehen, sodass mit dem Lagesensor erfasste Belastungswerte auch erfasst werden können, wenn der Orbitalschweißkopf 20 nicht mit einem Schweißstromquellengehäuse 11 bzw. einem Basiscontroller 12 verbunden ist.

Die oben erläuterten Ausführungsbeispiele weisen eine im Wesentlichen abgeschlossene Kammer 50 auf, welche beim Schweißen mit Inertgas gefüllt wird. Die Erfindung kann auch an einem offenen Orbitalschweißkopf realisiert sein, der keine solche Kammer besitzt. Hier kann das Schutzgas frei abströmen.

### Bezugszeichen

- 1: Orbitalschweißvorrichtung
- 2: Kabels
- 10: Schweißstromquelle
- 11: Schweißstromquellengehäuse
- 12: Basiscontroller
- 20: Orbitalschweißkopf
- 21: Rohrhalterung
- 22: Schweißelektrodenhalter
- 23: Schweißelektrode
- 31: Motor
- 41: Lagesensor
- 41.1: Lagewert
- 42: Belastungssensor
- 50: Kammer
- 60: elektrische Schaltung
- 61: Speichereinrichtung
- 61.1: Belastungswert
- 62.1: Elektrodenbelastungswert
- 62: Überwachungsmodul

## Patentansprüche

1. Orbitalschweißkopf (20) für eine Orbitalschweißvorrichtung (1) zum Anschlie-ßen mittels eines Kabels (2) an eine Schweißstromquelle (10) in einem Schweißstromquellengehäuse (11) welche mit einem Basiscontroller (12) versehen ist, wobei der Orbitalschweißkopf (20) eine Rohrhalterung (21) und einen gegenüber der Rohrhalterung (21) drehbar gelagerten Schweißelektrodenhalter (22) zur Halterung einer Schwei-βelektrode (23) aufweist, wobei die Orbitalschweißvorrichtung (1) einen Motor (31) aufweist, welcher eingerichtet ist, den Schweißelektrodenhalter (22) anzutreiben und ihn so gegenüber der Rohrhalterung (21) zu verdrehen, und der Orbitalschweißkopf (20) eine elektrische Schaltung (60) aufweist
**dadurch gekennzeichnet, dass** die elektrische Schaltung (60) eine Speichereinrichtung (61) aufweist, welche im Orbitalschweißkopf (20) angeordnet ist, wobei die elektrische Schaltung (60) ausgebildet ist, um einen oder mehrere Elektrodenbelastungswerte (62.1) der Schweißelektrode (23) in die Speichereinrichtung (61) zu speichern und die elektrische Schaltung (60) des Orbitalschweißkopfes (20) derart ausgebildet ist, dass anhand der Elektrodenbelastungswerte ein Wartungszustandswert der Schwei-βelektrode bestimmt wird, der ein Maß für den Verschleiß der Schweißelektrode (23) ist, wobei der eine oder die mehreren Elektrodenbelastungswerte einen oder mehrere der folgenden Parameter umfassen:
- gemessene Spannung an der Schweißelektrode in Kombination mit dem angelegten Strom, und/oder
- gemessenen Widerstand an der Elektrode.

2. Orbitalschweißkopf (20) nach Anspruch 1,
**dadurch gekennzeichnet, dass** der Wartungszustandswert eine dimensionslose Größe ist, welche den Wartungszustand zwischen 1 und 0 bzw. zwischen 100% und 0% angibt, wobei 1 bzw. 100% eine unbenutzte Schweißelektrode (23) und 0 bzw. 0% eine verschlissene und auszutauschende Schweißelektrode (23) bedeutet

3. Orbitalschweißkopf (20), nach Anspruch 1 oder 2, **dadurch gekennzeichnet, dass** die elektrische Schaltung (60) des Orbitalschweißkopfes (20) (12) derart ausgebildet ist, dass zunächst ein oder mehrere Elektrodenbelastungswerte als Referenzwerte gespeichert werden und der Verschleiß der Schweißelektrode durch Vergleichen eines oder mehrerer weiterer Elektrodenbelastungswerte mit dem oder den Referenzwerten bestimmt wird.

4. Orbitalschweißkopf (20) für eine Orbitalschweißvorrichtung (1) zum Anschlie-ßen mittels eines Kabels (2) an eine Schweißstromquelle (10) in einem Schweißstromquellengehäuse (11) welche mit einem Basiscontroller (12) versehen ist, wobei ein Orbitalschweißkopf (20) eine Rohrhalterung (21) und einen gegenüber der Rohrhalterung (21) drehbar gelagerten Schweißelektrodenhalter (22) zur Halterung einer Schwei-βelektrode (23) aufweist, wobei die Orbitalschweißvorrichtung (1) einen Motor (31) aufweist, welcher eingerichtet ist, den Schweißelektrodenhalter (22) anzutreiben und ihn so gegenüber der Rohrhalterung (21) zu verdrehen, und der Orbitalschweißkopf (20) eine elektrische Schaltung (60) aufweist,
**dadurch gekennzeichnet, dass** die elektrische Schaltung (60) eine Speichereinrichtung (61) aufweist, welche im Orbitalschweißkopf (20) angeordnet ist, wobei die elektrische Schaltung (60) ausgebildet ist, um einen oder mehrere Elektrodenbelastungswerte (62.1) der Schweißelektrode (23) in die Speichereinrichtung (61) zu speichern und die elektrische Schaltung (60) des Orbitalschweißkopfes (20) derart ausgebildet ist, dass zunächst ein oder mehrere Elektrodenbelastungswerte als Referenzwerte gespeichert werden und der Verschleiß der Schweißelektrode durch Vergleichen eines oder mehrerer weiterer Elektrodenbelastungswerte mit dem oder den Referenzwerten bestimmt wird,
wobei der eine oder die mehreren Elektrodenbelastungswerte einen oder mehrere der folgenden Parameter umfassen:- gemessene Spannung an der Schweißelektrode in Kombination mit dem angelegten Strom, und/oder- gemessenen Widerstand an der Elektrode.

5. Orbitalschweißkopf (20) nach einem der Ansprüche 1 bis 4,
**dadurch gekennzeichnet,**
**dass** der Verlauf der ermittelten Elektrodenbelastungswerte und/oder Wartungszustandswerte überwacht wird und eine vorbestimmte Abweichung von einem vorbestimmten Verlauf als Verschleiß der Schweißelektrode bewertet wird, oder dass das Über- oder Unterschreiten des ermittelten Elektrodenbelastungswerte und/oder Wartungszustandswertes als nicht akzeptabler Verschleiß der Schweißelektrode bewertet wird.

6. Orbitalschweißkopf (20) nach Anspruch 5,
**dadurch gekennzeichnet,**
**dass** ein Überwachungsmodul, mit dem selbsttätig das Abweichen von einem vorbestimmten Verlauf und/oder das Unter- oder Überschreiten des vorbestimmten Schwellenwertes überwacht wird und beim Feststellen eines nicht akzeptablen Verschleißes eine Warnmeldung erzeugt wird, wobei vorzugsweise das Überwachungsmodul derart ausgebildet ist, dass ein Abweichungsschwellenwert für die vorbestimmte Abweichung und/oder der Schwellenwert für das Über- oder Unterschreiten des Schwellenwertes manuell festlegbar bzw. veränderbar ist.

7. Orbitalschweißkopf (20) nach einem der Ansprüche 1 bis 6,
**dadurch gekennzeichnet,**
**dass** der eine oder die mehreren Elektrodenbelastungswerte einen oder mehrere der folgenden Parameter umfassen:
- gesamte elektrische Arbeit, welche an der Schweißelektrode geleistet wird,
- gesamte elektrische Ladung, welche durch die Schweißelektrode fliest,
- gesamte elektrische Wirkarbeit, welche von der Schweißelektrode geleistet wird,
- maximaler Strom pro Schweißvorgang,
- elektrische Ladung pro Schweißvorgang,
- elektrische Arbeit bzw. Wirkarbeit pro Schweißvorgang,
- gesamte Betriebszeit.

8. Orbitalschweißkopf (20) nach einem der Ansprüche 1 bis 7,
**dadurch gekennzeichnet,**
**dass** eine Rücksetzeinrichtung zum Zurücksetzen des einen oder der mehreren Elektrodenbelastungswerte beim Austausch einer Schweißelektrode vorgesehen ist.

9. Orbitalschweißkopf (20) nach einem der Ansprüche 1 bis 8,
**dadurch gekennzeichnet,**
**dass** eine Ausgabeeinrichtung am Orbitalschweißkopf (20) vorgesehen ist, um einen Wartungszustand der im Orbitalschweißkopf (20) befindlichen Schweißelektrode anzuzeigen.

10. Orbitalschweißkopf nach einem der Ansprüche 1 bis 9,
**dadurch gekennzeichnet,**
**dass** der Orbitalschweißkopf (20) eine Kommunikationseinrichtung zum Kommunizieren über eine bidirektionale digitale Datenverbindung mit dem Basiscontroller (12) aufweist.

11. Orbitalschweißvorrichtung mit einer Schweißstromquelle (10) in einem Schweißstromquellengehäuse (11), welche mit einem Basiscontroller (12) versehen ist, und einem Orbitalschweißkopf nach einem der Ansprüche 1 bis 10.

12. Orbitalschweißvorrichtung (1), wobei der Orbitalschweißkopf (20) nach Anspruch 10 ausgebildet ist,
**dadurch gekennzeichnet,**
**dass** der Basiscontroller (12) eine Basiskommunikationseinrichtung zum Kommunizieren über die Datenverbindung mit der Kommunikationseinrichtung des Orbitalschweißkopfes aufweist, wobei der Basiscontroller (12) zum Einlesen eines oder mehrerer Elektrodenbelastungswerte, welche am Basiscontroller (12) und/oder an der Schweißstromquelle (10) vorliegen und/oder an der Schweißstromquelle (10) mittels einem oder mehreren Sensoren gemessen werden, und zum Weiterleiten an den Orbitalschweißkopf (20) ausgebildet ist.

13. Orbitalschweißvorrichtung nach Anspruch 11 oder 12,
**dadurch gekennzeichnet,**
**dass** die Basiscontroller (12) bei der Ausführung eines Schweißprogrammes den durch den bzw. die im Orbitalschweißkopf gespeicherten Elektrodenbelastungswerte definierten Wartungszustand der Schweißelektrode berücksichtigt, wobei ein jeweiliges Schweißprogramm an den Wartungszustand der Schweißelektrode angepasst und/oder bei der Auswahl eines von mehreren Schweißprogrammen der Wartungszustand der Schweißelektrode berücksichtigt wird.

14. Verfahren zum Betreiben einer Orbitalschweißvorrichtung (1), wobei von einer Schweißstromquelle (10) mittels eines Kabels (2) Strom an einen Orbitalschweißkopf (20) geleitet wird, ein Schweißelektrodenhalter (22) am Orbitalschweißkopf (20) mittels eines Motors (31) angetrieben und gegenüber einer Rohrhalterung (21) des Orbitalschweißkopfs (20) verdreht wird, wobei während eines Schweißprozesses eine Schweißelektrode (23) des Orbitalschweißkopfes (20) mit Schutzgas umgeben wird, **dadurch gekennzeichnet, dass** mittels einer elektrischen Schaltung (60) ein oder mehrere Elektrodenbelastungswerte (61.1) einer Schweißelektrode in einer Speichereinrichtung (61), welche im Orbitalschweißkopf (20) angeordnet ist, gespeichert werden, und mittels der elektrischen Schaltung (60) des Orbitalschweißkopfes (20) anhand der Elektrodenbelastungswerte ein Wartungszustandswert der Schweißelektrode bestimmt wird, der ein Maß für den Verschleiß der Schweißelektrode (23) ist, und/oder mittels einer elektrischen Schaltung (60) ein oder mehrere Elektrodenbelastungswerte (62.1) einer Schweißelektrode (23) in einer Speichereinrichtung (61) gespeichert werden, welche im Orbitalschweißkopf (20) angeordnet ist, und zunächst ein oder mehrere Elektrodenbelastungswerte als Referenzwerte gespeichert werden und der Verschleiß der Schweißelektrode durch Vergleichen eines oder mehrerer weiterer Elektrodenbelastungswerte mit dem oder den Referenzwerten bestimmt wird,
wobei der eine oder die mehreren Elektrodenbelastungswerte einen oder mehrere der folgenden Parameter umfassen:
- gemessene Spannung an der Schweißelektrode in Kombination mit dem angelegten Strom,
- gemessenen Widerstand an der Elektrode.

15. Verfahren nach Anspruch 14,
**dadurch gekennzeichnet,**
**dass** ein Orbitalschweißkopf nach einem der Ansprüche 1 bis 10 und/oder eine Orbitalschweißvorrichtung nach einem der Ansprüche 11 bis 13 verwendet wird.

## Claims

1. An orbital welding head (20) for an orbital welding apparatus (1) for connection by means of a cable (2) to a welding current source (10) in a welding current source housing (11), said current source being equipped with a base controller (12), wherein the orbital welding head (20) comprises a tube mount (21) and a welding electrode holder (22) rotatably supported opposite the tube mount (21) for mounting a welding electrode (23), wherein the orbital welding apparatus (1) comprises a motor (31), which is configured so as to drive the welding electrode holder (22) and thus rotate it opposite the tube mount (21), and the orbital welding head (20) comprises an electronic circuit (60)
**characterized in that** the electronic circuit (60) comprises a memory (61), which is arranged in the orbital welding head (20), wherein the electronic circuit (60) is configured so as to store one or more electrode load values (62.1) of the welding electrode (23) in the memory (61), and the electronic circuit (60) of the orbital welding head (20) is configured such that
using the electrode load values, a maintenance state value of the welding electrode is determined, which is a measure of the wear of the welding electrode (23), wherein the one or more electrode load values comprise one or more of the following parameters:
- measured voltage on the welding electrode in combination with the applied current, and/or
- measured resistance on the electrode.

2. The orbital welding head (20) according to claim 1, **characterized in that** the maintenance state value is preferably a dimensionless quantity, which indicates the maintenance state between 1 and 0 or between 100% and 0%, respectively, wherein 1 or 100% means an unused welding electrode (23) and 0 or 0% means a worn welding electrode (23) needing to be replaced.

3. The orbital welding head (20) according to claim 1 or 2, **characterized in that**
the electric circuitry (60) of the orbital welding head (20) (12) is configured such that
one or more electrode load values are first stored as reference values, and the wear of the welding electrode is determined by comparing one or more further electrode load values to the reference values.

4. An orbital welding head (20) for an orbital welding apparatus (1) for connection by means of a cable (2) to a welding current source (10) in a welding current source housing (11), said current source being equipped with a base controller (12), wherein an orbital welding head (20) comprises a tube mount (21) and a welding electrode holder (22) rotatably supported opposite the tube mount (21) for mounting a welding electrode (23), wherein the orbital welding apparatus (1) comprises a motor (31), which is configured so as to drive the welding electrode holder (22) and thus rotate it opposite the tube mount (21), and the orbital welding head (20) comprises an electronic circuit (60)
**characterized in that** the electronic circuit (60) comprises a memory (61), which is arranged in the orbital welding head (20), wherein the electronic circuit (60) is configured so as to store one or more electrode load values (62.1) of the welding electrode (23) in the memory (61), and the electronic circuit (60) of the orbital welding head (20) is configured such that
one or more electrode load values are first stored as reference values, and the wear of the welding electrode is determined by comparing one or more further electrode load values to the reference values,
wherein the one or more electrode load values include one or more of the following parameters: - measured voltage on the welding electrode in combination with the applied current, and/or - measured resistance on the electrode.

5. The orbital welding head (20) according to any one of claims 1 to 4,
**characterized in that**
the curve of the determined electrode load values and/or maintenance state values is monitored, and a predetermined deviation from a predetermined curve is evaluated as wear on the welding electrode, or the overshooting or undershooting of the determined electrode load values and/or maintenance state values is evaluated as unacceptable wear of the welding electrode.

6. The orbital welding head (20) according to claim 5, **characterized in that**
a monitoring module with which the deviation from a predetermined curve and/or undershooting or overshooting of the predetermined threshold value is automatically monitored and, when unacceptable wear is detected, a warning is generated, wherein the monitoring module is preferably configured such that a deviation threshold value for the predetermined deviation and/or the threshold for overshooting or undershooting this threshold value is manually settable and changeable.

7. The orbital welding head (20) according to any one of claims 1 to 6,
**characterized in that**
the one or more electrode load values have one or more of the following parameters:
- total electrical work performed at the welding electrode
- total electrical charge flowing through the welding electrode,
- total electrical active energy performed by the welding electrode,
- maximum current per welding operation,
- electrical charge per welding operation,
- electrical work or active energy per welding operation,
- total operating time.

8. The orbital welding head (20) according to any one of claims 1 to 7,
**characterized in that**
a resetting device for resetting the one or more electrode load values is provided when replacing a welding electrode.

9. The orbital welding head (20) according to any one of claims 1 to 8,
**characterized in that**
an output device is provided on the orbital welding head (20) in order to indicate a maintenance state of the welding electrode located in the orbital welding head (20).

10. The orbital welding head according to any one of claims 1 to 9,
**characterized in that**
the orbital welding head (20) comprises a communication device for communicating with the base controller (12) via a bidirectional digital data link.

11. An orbital welding apparatus having a welding current source (10) in a welding current source housing (11), said current source being equipped with a base controller (12), and an orbital welding head according to any one of claims 1 to 10.

12. The orbital welding apparatus (1), wherein the orbital welding head (20) is configured according to claim 10, **characterized in that**
the base controller (12) comprises a base communication device for communicating via the data link with the communication device of the orbital welding head, wherein the base controller (12) is configured so as to read one or more electrode load values, which are present on the base controller (12) and/or at the welding current source (10) and/or are measured at the welding current source (10) by means of one or more sensors, and is configured so as to pass these on to the orbital welding head (20).

13. The orbital welding apparatus according to claim 11 or 12, **characterized in that**
the base controller (12), when executing a welding program, considers the maintenance state of the welding electrode as defined by the electrode load value(s) stored in the orbital welding head, wherein a respective welding program is adjusted to the maintenance state of the welding electrode and/or, when selecting one of a plurality of welding programs, considers the maintenance state of the welding electrode.

14. A method for operating an orbital welding apparatus (1), wherein current is passed from a welding current source (10) by means of a cable (2) to an orbital welding head (20), and a welding electrode holder (22) on the orbital welding head (20) is driven by means of a motor (31) and is rotated opposite a tube mount (21) of the orbital welding head (20), wherein a welding electrode (23) of the orbital welding head (20) is surrounded with inert gas during a welding process, **characterized in that,** by means of an electronic circuit (60), one or more electrode load values (61.1) of a welding electrode are stored in a memory (61), which is arranged in the orbital welding head (20), and, by means of the electronic circuit (60) of the orbital welding head (20), a maintenance state value of the welding electrode is determined using the electrode load values, said state being a measure of the wear on the welding electrode (23), and/or by means of an electronic circuit (60), one or more electrode load values (62.1) of a welding electrode (23) are stored in a memory (61), which is arranged in the orbital welding head (20), and one or more electrode load values are first stored as reference values, and the wear of the welding electrode is determined by comparing one or more further electrode load values to the reference values, wherein the one or more
electrode load values include one or more of the following parameters:
- measured voltage on the welding electrode in combination with the applied current,
- measured resistance on the electrode.

15. The method according to claim 14,
**characterized in that**
an orbital welding head according to any one of claims 1 to 10 and/or an orbital welding apparatus according to any one of claims 11 to 13 is used.

## Revendications

1. Tête de soudage orbital (20) pour un appareil de soudage orbital (1) destiné à être connecté au moyen d'un câble (2) à une source de courant de soudage (10) dans un logement de source de courant de soudage (11), ladite source de courant étant équipée d'un dispositif de commande de base (12), dans lequel la tête de soudage orbital (20) comprend un support de tube (21) et un porteur d'électrode de soudage (22) supporté de manière rotative à l'opposé du support de tube (21) pour le montage d'une électrode de soudage (23), dans lequel l'appareil de soudage orbital (1) comprend un moteur (31), qui est configuré de manière à entraîner le porteur d'électrode de soudage (22) et ainsi à le faire tourner à l'opposé du support de tube (21), et la tête de soudage orbital (20) comprend un circuit électronique (60)
**caractérisé en ce que** le circuit électronique (60) comprend une mémoire (61), qui est agencée dans la tête de soudage orbital (20), dans laquelle le circuit électronique (60) est configuré de manière à stocker une ou plusieurs valeurs de charge d'électrode (62.1) de l'électrode de soudage (23) dans la mémoire (61), et le circuit électronique (60) de la tête de soudage orbital (20) est configuré de sorte qu'
à l'aide des valeurs de charge d'électrode, une valeur d'état de maintenance de l'électrode de soudage est déterminée, qui est une mesure de l'usure de l'électrode de soudage (23), dans lequel la ou les valeurs de charge d'électrode comprennent un ou plusieurs des paramètres suivants:
- la tension mesurée sur l'électrode de soudage en combinaison avec le courant appliqué, et/ou
- la résistance mesurée sur l'électrode.

2. Tête de soudage orbital (20) selon la revendication 1,
**caractérisée en ce que** la valeur de l'état de maintenance est de préférence une quantité sans dimension, qui indique l'état de maintenance entre 1 et 0 ou entre 100 % et 0 %, respectivement, dans lequel 1 ou 100 % signifie une électrode de soudage non utilisée (23) et 0 ou 0 % signifie une électrode de soudage usée (23) devant être remplacée.

3. Tête de soudage orbital (20) selon la revendication 1 ou 2, **caractérisée en ce que**
le circuit électrique (60) de la tête de soudage orbital (20)(12) est configuré de sorte qu'
une ou plusieurs valeurs de charge d'électrode sont d'abord stockées en tant que valeurs de référence, et l'usure de l'électrode de soudage est déterminée par la comparaison d'une ou plusieurs autres valeurs de charge d'électrode aux valeurs de référence.

4. Tête de soudage orbital (20) pour un appareil de soudage orbital (1) destinée à être connectée au moyen d'un câble (2) à une source de courant de soudage (10) dans un logement de source de courant de soudage (11), ladite source de courant étant équipée d'un dispositif de commande de base (12), dans lequel une tête de soudage orbital (20) comprend un support de tube (21) et un porteur d'électrode de soudage (22) supporté de manière rotative à l'opposé du support de tube (21) pour le montage d'une électrode de soudage (23), dans lequel l'appareil de soudage orbital (1) comprend un moteur (31), qui est configuré de manière à entraîner le porteur d'électrode de soudage (22) et ainsi à le faire tourner à l'opposé du support de tube (21), et la tête de soudage orbital (20) comprend un circuit électronique (60)
**caractérisé en ce que** le circuit électronique (60) comprend une mémoire (61), qui est agencée dans la tête de soudage orbital (20), dans laquelle le circuit électronique (60) est configuré de manière à stocker une ou plusieurs valeurs de charge d'électrode (62.1) de l'électrode de soudage (23) dans la mémoire (61), et le circuit électronique (60) de la tête de soudage orbital (20) est configuré de sorte qu'
une ou plusieurs valeurs de charge d'électrode sont d'abord stockées en tant que valeurs de référence, et l'usure de l'électrode de soudage est déterminée par la comparaison d'une ou plusieurs autres valeurs de charge d'électrode aux valeurs de référence,
dans lequel la ou les valeurs de charge d'électrode comprennent un ou plusieurs des paramètres suivants: - une tension mesurée sur l'électrode de soudage en combinaison avec le courant appliqué, et/ou - une résistance mesurée sur l'électrode.

5. Tête de soudage orbital (20) selon l'une quelconque des revendications 1 à 4,
**caractérisée en ce que**
la courbe des valeurs de charge d'électrode déterminées et/ou des valeurs d'état de maintenance est surveillée, et un écart prédéterminé par rapport à une courbe prédéterminée est évalué en tant qu'usure sur l'électrode de soudage, ou le dépassement ou sous-dépassement des valeurs de charge d'électrode déterminées et/ou des valeurs d'état de maintenance est évalué en tant qu'usure inacceptable de l'électrode de soudage.

6. Tête de soudage orbital (20) selon la revendication 5, **caractérisée en ce que**
un module de surveillance avec lequel l'écart par rapport à une courbe prédéterminée et/ou le sous-dépassement ou le dépassement de la valeur seuil prédéterminée est surveillé automatiquement et, lorsqu'une usure inacceptable est détectée, un avertissement est généré, dans lequel le module de surveillance est de préférence configuré de sorte qu'une valeur seuil d'écart pour l'écart prédéterminé et/ou le seuil de dépassement ou de sous-dépassement de cette valeur seuil est manuellement réglable et modifiable.

7. Tête de soudage orbital (20) selon l'une quelconque des revendications 1 à 6,
**caractérisée en ce que**
la ou les valeurs de charge d'électrode ont un ou plusieurs des paramètres suivants:
- le travail électrique total effectué au niveau de la charge électrique totale
- de l'électrode de soudage s'écoulant à travers l'électrode de soudage,
- l'énergie active électrique totale réalisée par l'électrode de soudage,
- le courant maximum par opération de soudage,
- la charge électrique par opération de soudage,
- le travail électrique ou l'énergie active par opération de soudage,
- le temps de fonctionnement total.

8. Tête de soudage orbital (20) selon l'une quelconque des revendications 1 à 7,
**caractérisée en ce qu'**
un dispositif de réinitialisation pour la réinitialisation de la ou des valeurs de charge d'électrode est fourni lors du remplacement d'une électrode de soudage.

9. Tête de soudage orbital (20) selon l'une quelconque des revendications 1 à 8,
**caractérisée en ce que**
un dispositif de sortie est fourni sur la tête de soudage orbital (20) de sorte à indiquer un état de maintenance de l'électrode de soudage située dans la tête de soudage orbital (20).

10. Tête de soudage orbital selon l'une quelconque des revendications 1 à 9,
**caractérisée en ce que**
la tête de soudage orbital (20) comprend un dispositif de communication pour la communication avec le dispositif de commande de base (12) via une liaison de données numériques bidirectionnelle.

11. Appareil de soudage orbital ayant une source de courant de soudage (10) dans un logement de source de courant de soudage (11), ladite source de courant étant équipée d'un dispositif de commande de base (12), et une tête de soudage orbital selon l'une quelconque des revendications 1 à 10.

12. Appareil de soudage orbital (1), dans lequel la tête de soudage orbital (20) est configurée selon la revendication 10,
**caractérisé en ce que**
le dispositif de commande de base (12) comprend un dispositif de communication de base pour la communication via la liaison de données avec le dispositif de communication de la tête de soudage orbital, dans lequel le dispositif de commande de base (12) est configuré de manière à lire une ou plusieurs valeurs de charge d'électrode, qui sont présentes sur le dispositif de commande de base (12) et/ou au niveau de la source de courant de soudage (10) et/ou sont mesurées au niveau de la source de courant de soudage (10) au moyen d'un ou plusieurs capteurs, et est configuré de manière à passer celles-ci sur la tête de soudage orbital (20).

13. Appareil de soudage orbital selon la revendication 11 ou 12, **caractérisé en ce que**
le dispositif de commande de base (12), lors de l'exécution d'un programme de soudage, considère l'état de maintenance de l'électrode de soudage tel que défini par la ou les valeur(s) de charge d'électrode stockées dans la tête de soudage orbital, dans lequel un programme de soudage respectif est ajusté à l'état de maintenance de l'électrode de soudage et/ou, lors de la sélection d'un parmi une pluralité de programmes de soudage, considère l'état de maintenance de l'électrode de soudage.

14. Procédé de fonctionnement d'un appareil de soudage orbital (1), dans lequel le courant passe d'une source de courant de soudage (10) au moyen d'un câble (2) à une tête de soudage orbital (20), et un support d'électrode de soudage (22) sur la tête de soudage orbital (20) est entraîné au moyen d'un moteur (31) et tourne à l'opposé d'un support de tube (21) de la tête de soudage orbital (20), dans lequel une électrode de soudage (23) de la tête de soudage orbital (20) est entourée d'un gaz inerte lors d'un processus de soudage,
**caractérisé en ce que,** au moyen d'un circuit électronique (60), une ou plusieurs valeurs de charge d'électrode (61.1) d'une électrode de soudage sont stockées dans une mémoire (61) qui est agencée dans la tête de soudage orbital (20), et, au moyen du circuit électronique (60) de la tête de soudage orbital (20), une valeur d'état de maintenance de l'électrode de soudage est déterminée à l'aide des valeurs de charge d'électrode, ledit état étant une mesure de l'usure sur l'électrode de soudage (23), et/ou
au moyen d'un circuit électronique (60), une ou plusieurs valeurs de charge d'électrode (62.1) d'une électrode de soudage (23) sont stockées dans une mémoire (61), qui est agencée dans la tête de soudage orbital (20), et une ou plusieurs valeurs de charge d'électrode sont d'abord stockées en tant que valeurs de référence, et l'usure de l'électrode de soudage est déterminée par la comparaison d'une ou plusieurs autres valeurs de charge d'électrode aux valeurs de référence,
dans lequel le ou les
valeurs de charge de l'électrode comprennent un ou plusieurs des paramètres suivants:
- la tension mesurée sur l'électrode de soudage en combinaison avec le courant appliqué,
- la résistance mesurée sur l'électrode.

15. Procédé selon la revendication 14,
**caractérisé en ce que**
une tête de soudage orbital selon l'une quelconque des revendications 1 à 10 et/ou un appareil de soudage orbital selon l'une quelconque des revendications 11 à 13 est utilisé.
